# EUROPÄISCHE PATENTANMELDUNG

(11) **EP 1 004 486 A2**
(43) Veröffentlichungstag der Anmeldung: **31.05.2000**
(21) Anmeldenummer: 99123502.9
(22) Anmeldetag: 25.11.1999
(51) Int. Cl.: B60R 25/02

(54) **Schwenkscheibenlenkschloss mit Sicherungsbuchse**

(30) Priorität: 26.11.1998 DE 19854682
(71) Anmelder: Valeo Deutschland GmbH & Co. Sicherheitssysteme, 85253 Erdweg (DE)
(72) Erfinder: Thiele, Christoph, 80686 München (DE); Loderer, Karin, 85247 Schwabhausen (DE)
(74) Vertreter: COHAUSZ HANNIG DAWIDOWICZ & PARTNER

(57) **Zusammenfassung**

Lenkschloß für ein Kraftfahrzeug mit einem Schließzylinder, dessen Zylinderkern mit seinem inneren Ende einen Steuernocken verdreht, wobei mittels des Steuernockens ein Sperrstück senkrecht zur Schloßachse bewegbar ist, das in einer sperrenden Stellung die Bewegung der Lenkspindel blockiert, wobei das Sperrstück eine Schwenkscheibe 11 ist, die durch den Steuernocken 6 zwischen einer sperrenden und einer entsperrten Stellung verschwenkbar ist, wobei der Steuernocken 6 eine Ausnehmung 14 der Schwenkscheibe 11 durchragt und wobei der Steuernocken 6 von einer koaxial zur Schloßachse verschieblichen Sicherungsbuchse 18 umgeben ist, die in der entsperrten Stellung die Ausnehmung 14 der Schwenkscheibe 11 zumindest teilweise durchragt und in dieser Sicherungsstellung ein Verschwenken der Schwenkscheibe 11 blockiert.

## Beschreibung

Die Erfindung betrifft ein Lenkschloß für ein Kraftfahrzeug mit einem Schließzylinder, dessen Zylinderkern mit seinem inneren Ende an Steuernocken verdreht, wobei mittels des Steuernockens ein Sperrstück senkrecht zur Schloßachse bewegbar ist, das in einer sperrenden Stellung die Bewegung der Lenkspindel blockiert.

Es ist bekannt, derartige Lenkschlösser mit bolzenförmigen Sperriegeln auszustatten, die neben der Schloßachse angeordnet sind und bei Drehung des Steuernockens über eine aufwendige Mechanik in die Lenksäule eingeführt werden, um diese gegen Verdrehen zu sichern. Derartige Lenkschlösser haben den Nachteil, daß der Antrieb des Sperriegels über verhältnismäßig große Hebel funktioniert, so daß zur Betätigung des Schlosses ein entsprechend großer Kraftaufwand nötig ist. Außerdem ist nachteilig, daß die Sperriegel solcher Schlösser eine axiale Bewegung ausführen und die Umsetzung der Drehbewegung des Steuernockens in die axiale Bewegung des Sperriegels mit entsprechend großem baulichen Aufwand des Antriebs einhergeht. Derartige Lenkschlösser sind somit kostenintensiv in der Fertigung und besonders anfällig im Betrieb.

Aufgabe der Erfindung ist es, ein Lenkschloß zu schaffen, was bei einfachem mechanischen Aufbau eine kostengünstige Herstellung und eine hohe Betriebssicherheit gewährleistet.

Diese Aufgabe wird durch ein Lenkschloß nach Anspruch 1 erfüllt.

Besondere Vorteile des erfindungsgemäßen Lenkschlosses ist die einfache Konstruktion, die sich in geringer Baugröße realisieren läßt. Dabei trägt die Konstruktion zu großen Einsparungen in der Fertigung bei und gewährleistet einen störungsfreien Betrieb des Lenkschlosses. Diese Vorteile werden dadurch erreicht, daß das Sperrstück eine Schwenkscheibe ist, die keine axiale, sondern eine rotatorische Bewegung zwischen ihrer sperrenden und der entsperrten Stellung vollzieht. Dabei ist vorteilhaft, daß die Drehung des Steuernockens, der die Schwenkscheibe durchgreift, einfach in die Schwenkbewegung der Schwenkscheibe umgesetzt wird.

Eine besonders vorteilhafte und robuste Form des Lenkschlosses weist eine Schwenkscheibe auf, die um eine außerhalb der Schloßachse verlaufende Schwenkachse verschwenkbar ist, wobei die Schloßachse und die Schwenkachse in einer Ebene liegen. Dabei kann durch den Abstand der beiden Achsen die Hebelwirkung des Treibnockens, der die Innenseite der Ausnehmung beaufschlagt, optimiert werden. Insgesamt ergibt sich eine günstige Hebelübersetzung zwischen dem Steuernockeneingriff über den Drehpunkt im Lagerstift zur Torsions- oder Blattfeder und ein günstiger Drehmomentverlauf, wobei der Treibnocken über eine Anlaufkontur an der Innenseite der Ausnehmung auf die Schwenkscheibe wirkt.

In einer besonders vorteilhaften Ausführungsform ist koaxial zum Steuernocken eine Sicherungsbuchse verschieblich gelagert, die in einer bestimmten Stellung der Schwenkscheibe in die Ausnehmung eingreifen kann, um die Schwenkscheibe in dieser Position zu sichern. Durch die Sicherungsbuchse wird sichergestellt, daß ein Einrasten des Lenkschlosses ohne gleichzeitiges Abziehen des Zündschlüssels unmöglich wird. Die einfache Realisierung dieser Sicherheitsfunktion trägt ebenfalls zur Minderung der Herstellungskosten und zur Betriebssicherheit des Lenkschlosses bei.

In einer baulich besonders einfachen Ausführungsform ist die zylindrische Sicherungsbuchse in einem Schloßkanal geführt, der in das Schloßgehäuse koaxial zum Steuernocken eingebracht ist. An der Innenwand dieses Schloßkanals, in den der Schließzylinder die Steuernocke und die Sicherungsbuchse eingebracht sind, ist die Sicherungsbuchse verschieblich geführt. Dabei ist die Sicherungsbuchse durch eine Nase, die in einer Nut des Gehäuses läuft, gegen Verdrehung gesichert, während der Schließzylinder und die Steuernocke im Schloßkanal drehbar gelagert sind. Dabei ist besonders vorteilhaft, daß Sicherungsbuchse und Steuernocke im gleichen bearbeiteten Durchmesser des Schloßgehäuses gelagert sind, so daß sich eine günstige Toleranzkette ergibt.

Weiterhin vorteilhaft an dem erfindungsgemäßen Lenkschloß ist, daß sich durch die besondere Ausbildung der Innenkontur der Schwenkscheibe die Drehmomentübertragung zwischen Steuernocken und Schwenkscheibe optimieren läßt. Durch die besondere Ausbildung dieser Steuerkurve kann sichergestellt werden, daß die Schwenkscheibe über die Sicherungsbuchse gesichert ist und der Steuernocken dennoch zwischen einem Winkel von 60° und 130° gedreht werden kann, ohne die Schwenkscheibe zu beeinflussen. In einer besonderen Ausführungsform ist das Gehäuse des Lenkschlosses derart ausgebildet, daß auf den von außen zugänglichen Deckel verzichtet werden kann. Diese Bauart weist sich durch eine erhöhte Sicherheit und durch den besonders kleinen Bauraum aus.

Ein Ausführungsbeispiel des erfindungsgemäßen Lenkschlosses mit Sicherungsbuchse ist in den Figuren 1 bis 4 dargestellt und wird im folgenden näher beschrieben.

Es zeigen:
- Figur 1: ein Lenkschloß in sperrender Stellung,
- Figur 2: ein Lenkschloß nach dem Einführen des Zündschlüssels,
- Figur 3: ein Lenkschloß in entsperrter Stellung,
- Figur 4: ein Lenkschloß in entsperrter Stellung in Draufsicht,
- Figur 5: ein Lenkschloß mit geschlossenem Gehäuse,
- Figur 6: ein Schnitt durch das Lenkschloß nach Figur 5.

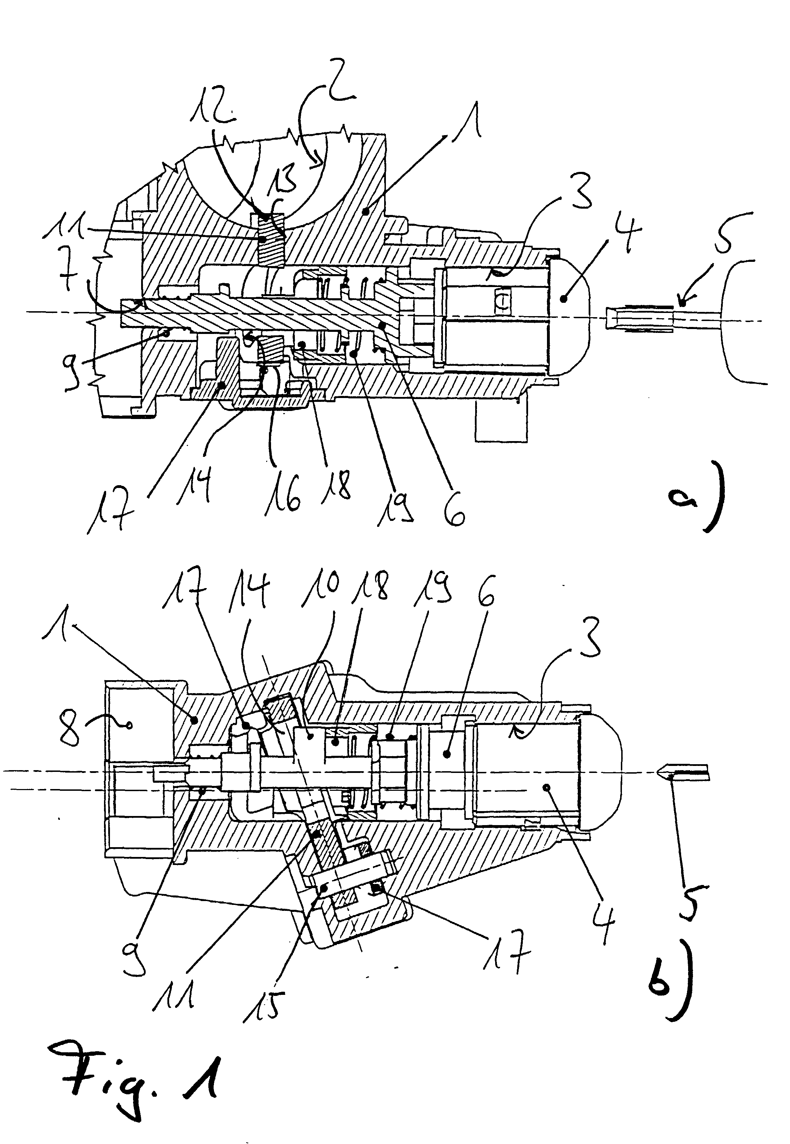

In Figur 1a und 1b ist ein Lenkschloß mit einem massiven Schloßgehäuse 1 dargestellt, in dem die Einzelteile des Lenkschlosses gelagert sind. Das Schloßgehäuse 1 weist eine Ausnehmung 2 zur Befestigung des Schlosses an der Lenksäule auf. In das Schloßgehäuse 1 ist ein Schloßkanal 3 eingebracht, in dem ein Schließzylinder 4 gelagert ist. Der Schließzylinder 4 wird nach Einschieben des Schlüssels 5 durch Drehen des Schlüssels betätigt. Der Schließzylinder verdreht seinerseits mit seinem Zylinderkern einen an seinem inneren Ende angebrachten Steuernocken 6, der mit seiner Spitze eine Bohrung im Boden 7 des Schloßkanals 3 durchragt und einen dahinterliegenden elektrischen Schalter 8 betätigt. Der Steuernocken 6 ist innerhalb des Schloßkanals 3 axial verschieblich gegen die Kraft einer am Boden 7 des Schloßkanals 3 sich abstützenden Feder 9 verschieblich.

Der Steuernocken 6 betreibt mit einem Treibnocken 10 eine Schwenkscheibe 11. Die Schwenkscheibe 11 hat die Funktion eines Sperriegels und rastet mit einer Rastnase 12 in eine Ausnehmung einer nicht dargestellten, in der Ausnehmung 2 befindlichen, Lenkspindel ein. Die Schwenkscheibe 11 ist in einer im Schloßgehäuse 1 befindlichen Nut 13 geführt, die parallel zur Lenkspindel ausgerichtet ist.

Die Schwenkscheibe weist im Bereich des Schloßkanals eine Ausnehmung 14 auf, durch die der Steuernocken 6 hindurchragt. Sie ist um eine außerhalb der Schloßachse liegende Schwenkachse 15 verschwenkbar und hat die Form und Funktion eines Exzenters. Die Verschwenkung der Schwenkscheibe 11 geschieht gegen die Kraft einer die Schwenkscheibe 11 beaufschlagenden Blattfeder 16. Die Blattfeder 16 sorgt dafür, daß die Schwenkscheibe 11 bei entsprechender Stellung der Lenkspindel und bei abgezogenem Schlüssel 5 automatisch in die Nut der Lenkspindel einrastet und diese festsetzt. Der die Schwenkachse 15 bildende Lagerstift sichert gleichzeitig einen Deckel 17 gegen Aufbruch, der eine seitliche Öffnung des Schloßkanals abdeckt. Der Deckel 17 ist durch Spannstifte fixiert und bildet das Widerlager, der die Schwenkscheibe 11 beaufschlagenden Blattfeder 16.

In den Schloßkanal 3 ist eine axial verschiebliche Sicherungsbuchse 18 eingebracht, die den Steuernocken 6 umgibt und die in der entsperrten Stellung die Ausnehmung 14 der Schwenkscheibe 11 durchragt. In dieser Sicherungsstellung ist die Schwenkscheibe 11 blockiert und kann nicht mehr in die Ausnehmung der Lenkspindel eingreifen, um diese gegen eine Bewegung zu sichern. Die Figuren la und lb zeigen die Sicherungsbuchse 18 in ihrer ausgerückten Stellung, in der sie durch Anschlag am Treibnocken 10 gegen ein Einrutschen in die Ausnehmung 14 gesichert ist. Gegen den Treibnocken 10 wird die Sicherungsbuchse 18 durch eine relativ entspannte Spiralfeder 19 gedrückt, die einerseits die Sicherungsbuchse 18 und andererseits einen Absatz des Steuernockens 6 beaufschlagt. Damit befindet sich die Sicherungsbuchse 18 in der sperrenden Stellung des Lenkschlosses in einem durch die Feder 19 etwas vorgespannten Zustand, wobei die Vorspannung zwischen zwei am Steuernocken 6 angeformten Abschnitten, nämlich einmal dem Treibnocken 10 und andererseits einem Absatz, geschieht. Bei entsprechender Freigabe durch den Treibnocken 10 kann die Sicherungsbuchse 18 in die Ausnehmung 14 einrutschen, wenn sich die Schwenkscheibe in der entsperrenden Stellung befindet.

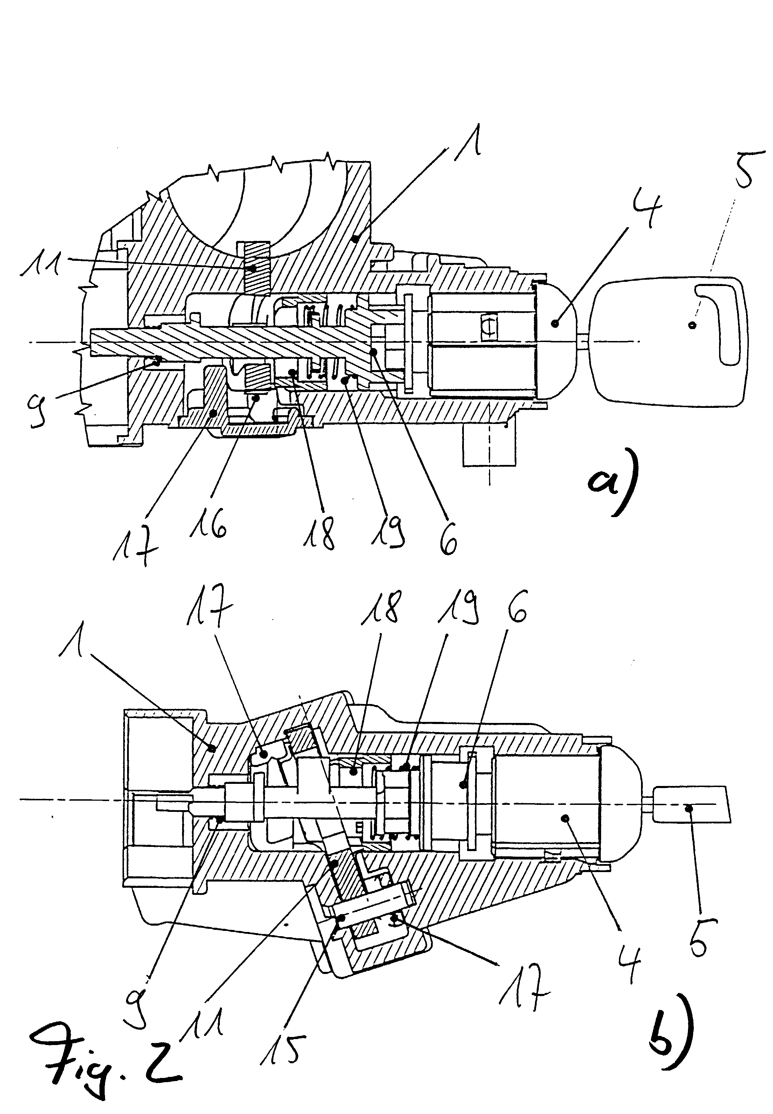

In Figur 2 ist das Lenkschloß nach Figur 1 nach dem Einführen des Zündschlüssels 5 gezeigt. Durch das Einführen des Zündschlüssels 5 wird der Schließzylinder 4 und entsprechend der Steuernocken 6 in axialer Richtung gegen die Blattfeder 9 verschoben. Gleichzeitig verschiebt sich die Sicherungsbuchse 18 in Richtung der Schwenkscheibe 11 und kommt mit ihrem Rand an der Oberfläche der Schwenkscheibe 11 zur Auflage, während sich der Treibnocken 10 in die Ausnehmung 14 bewegt. Durch weiteres Einschieben des Schlüssels 5 wird die Vorspannung auf die Sicherungsbuchse 18 durch Belastung der Feder 19 erhöht. In dieser Position ist die Sicherungsbuchse nunmehr für den sofortigen Eingriff in die Ausnehmung 14 vorgespannt.

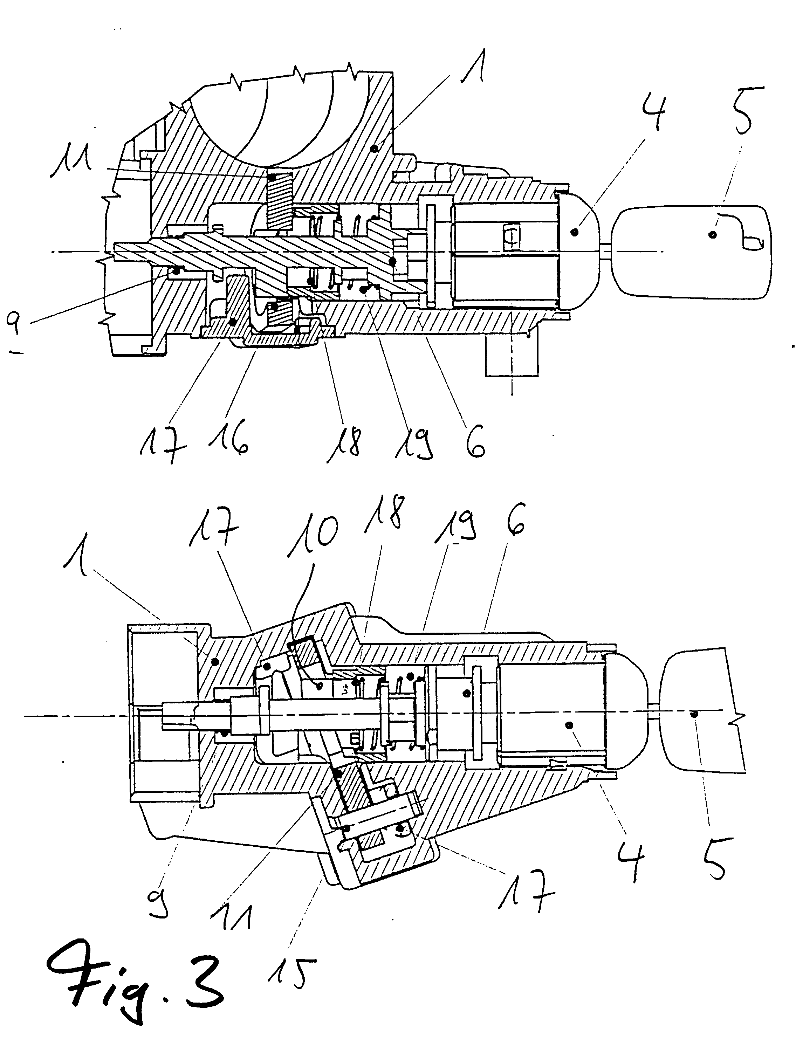

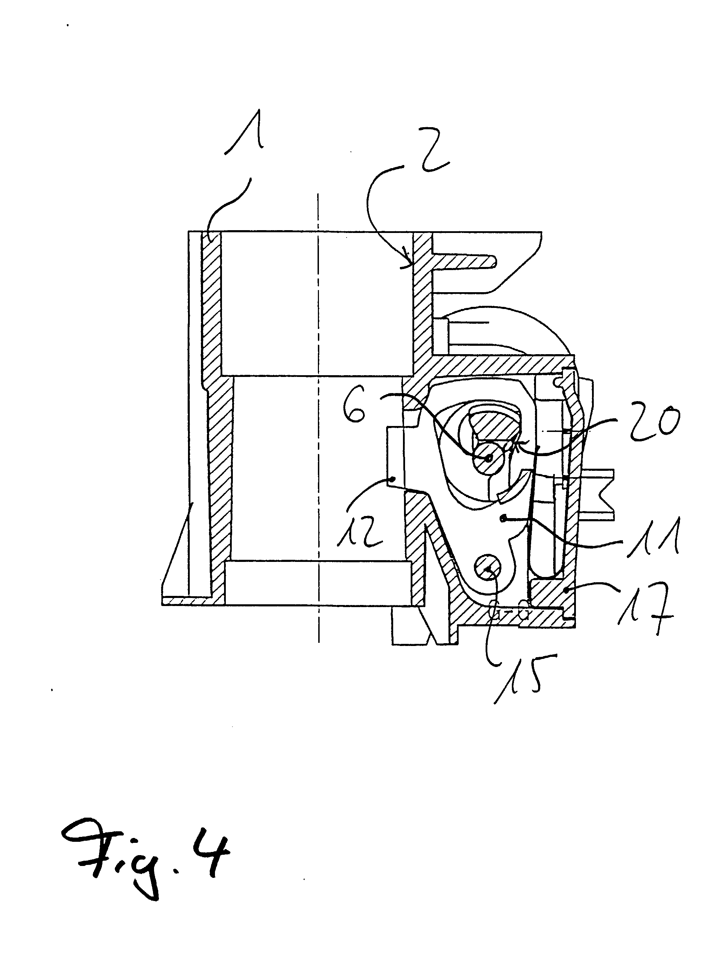

Nachdem der Schlüssel eingesteckt ist, wird er vom Fahrer verdreht, so daß der Treibnocken 10 eine Steuerkurve 20 (Figur 4) beaufschlagt und eine Verschwenkung der Schwenkscheibe 11 bewirkt. Durch diese Verschwenkung wird die Nase 12 aus der Ausnehmung in der Lenkspindel geführt, so daß eine Verdrehung der Lenkspindel möglich wird.

Sobald die Verschwenkung der Schwenkscheibe 11 einen gewissen Winkelgrad erreicht hat, gibt die Rastnase 12 die Bewegung der Lenkspindel frei. In dieser Position ist es der Sicherungsbuchse 18 möglich, in die Ausnehmung 14 der Schwenkscheibe 11 einzugreifen (Figur 3). In dieser Position ist die Schwenkscheibe 11 nunmehr durch die Sicherungsbuchse 18 gegen ein Einrasten in der Ausnehmung der Lenkspindel gesichert.

Stoppt der Fahrer durch Zurückdrehen des Schlüssels 5 den Kraftfahrzeugmotor und dreht den Schlüssel so weit zurück, daß ein Abziehen des Schlüssels 5 möglich wird, gibt zunächst der Treibnocken 10 die Bewegung der Schwenkscheibe 11 frei. Wird der Schlüssel abgezogen, so treibt die Feder 9 den Steuernocken 6 in axialer Richtung aus dem Schloßgehäuse 1. Dabei nimmt der Treibnocken 10 die Sicherungshülse 18 mit und führt sie aus der Ausnehmung 14. Da die Feder 19 sich ebenfalls um ein entsprechendes Stück in dieser Richtung bewegt, ist eine Kraftbeaufschlagung der Feder 19 nicht nötig und die Kraft der kleiner dimensionierten Feder 9 reicht aus, um das Ausrücken der Sicherungsbuchse 18 aus der Ausnehmung 14 zu bewerkstelligen. Ist der Schlüssel abgezogen und wird die Lenkspindel in die entsprechende Stellung bewegt, so kann die Schwenkscheibe 11 mit ihrer Rastnase 12 durch Beaufschlagung der Blattfeder 16 in die Ausnehmung der Lenkspindel einrasten und deren weitere Bewegung sperren.

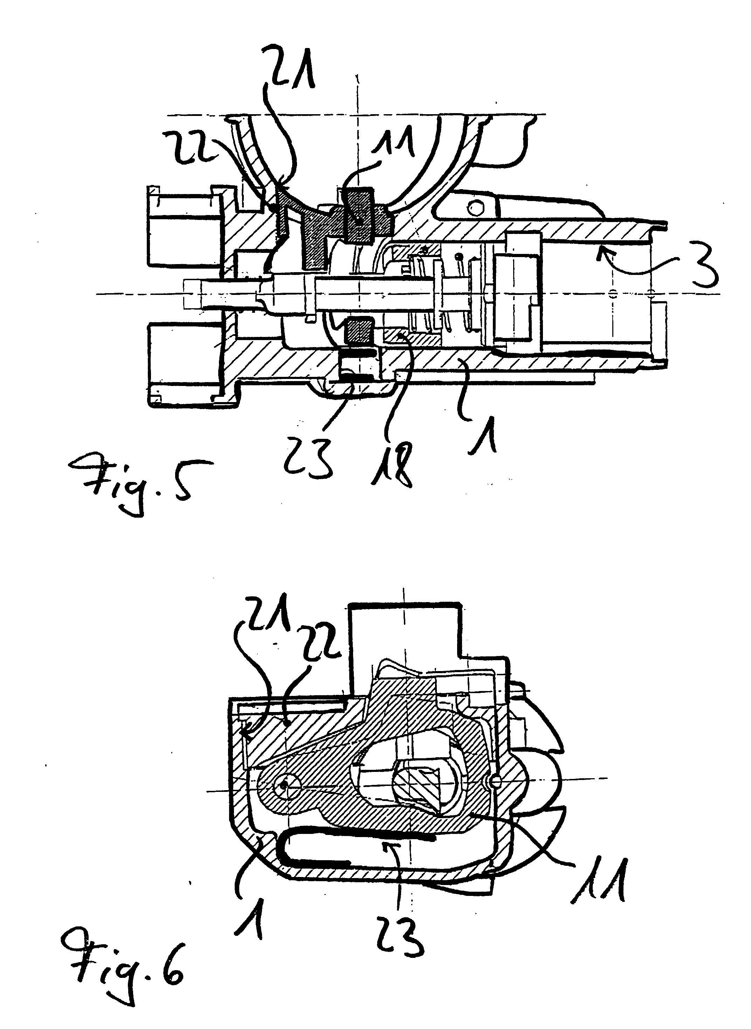

Die Ausführungsform des Lenkschlosses nach den Figuren 5 und 6 gleicht in den wesentlichen Bestandteilen den vorher beschriebenen Bauformen. Der entscheidende Unterschied besteht darin, daß das Gehäuse 1 zum Fahrzeuginnenraum vollständig geschlossen ist und die Montage durch den Schloßkanal 3 und durch eine Montageöffnung 21 geschieht. Die Montageöffnung 21 ist zur Lenkspindel hin geöffnet und wird nach dem Einsetzen der Schwenkscheibe 11 durch ein eingepreßtes Verschlußstück 22 geschlossen. Die Schwenkscheibe 11 wird von einer Blattfeder 23 in Ausrückrichtung beaufschlagt.

## Patentansprüche

1. Lenkschloß für ein Kraftfahrzeug mit einem Schließzylinder, dessen Zylinderkern mit seinem inneren Ende einen Steuernocken verdreht, wobei mittels des Steuernockens ein Sperrstück senkrecht zur Schloßachse bewegbar ist, das in einer sperrenden Stellung die Bewegung der Lenkspindel blockiert,
**dadurch gekennzeichnet**, daß das Sperrstück eine Schwenkscheibe (11) ist, die durch den Steuernocken (6) zwischen einer sperrenden und einer entsperrten Stellung verschwenkbar ist, wobei der Steuernocken (6) eine Ausnehmung (14) der Schwenkscheibe (11) durchragt.

2. Lenkschloß nach Anspruch 1,
**dadurch gekennzeichnet,** daß die Schwenkscheibe (11) um eine außerhalb der Schloßachse liegende Schwenkachse (15) durch Drehung des Steuernockens (6) verschwenkbar ist, wobei der Steuernocken (6) einen Treibnocken (10) aufweist, mit dem die Schwenkscheibe (11) an der Innenseite der Ausnehmung (14) beaufschlagbar ist.

3. Lenkschloß nach Anspruch 1 oder 2,
**dadurch gekennzeichnet,** daß der Steuernocken (11) von einer koaxial zur Schloßachse verschieblichen Sicherungsbuchse (18) umgeben ist, die in der entsperrten Stellung die Ausnehmung (14) der Schwenkscheibe (11) zumindest teilweise durchragt und in dieser Sicherungsstellung ein Verschwenken der Schwenkscheibe (11) blockiert.

4. Lenkschloß nach Anspruch 3,
**dadurch gekennzeichnet**, daß die Sicherungsbuchse (18) in einem in das Schloßgehäuse (1) eingebrachten Schloßkanal (3) axial verschieblich geführt ist.

5. Lenkschloß nach Anspruch 3 oder 4,
**dadurch gekennzeichnet,** daß die Sicherungsbuchse (18) zwischen dem Zylinderkern (4) und der Schwenkscheibe (11) angeordnet ist.

6. Lenkschloß nach einem der vorherigen Ansprüche,
**dadurch gekennzeichnet,** daß die Sicherungsbuchse (18) von einer Feder (19) insbesondere einer Spiralfeder in Richtung der Schwenkscheibe (11) beaufschlagt ist, wobei der Steuernocken (6) das Widerlager der Feder (19) bildet.

7. Lenkschloß nach einem der vorherigen Ansprüche,
**dadurch gekennzeichnet**, daß die axialer Verschiebung der in der Sicherungsstellung befindlichen Sicherungsbuchse (18) durch den Treibnocken (10) blockiert wird.

8. Lenkschloß nach einem der vorherigen Ansprüche,
**dadurch gekennzeichnet,** daß der Steuernocken (6) durch das Einführen des Zündschlüssels (5) gegen die Kraft einer Feder (9) axial verschieblich ist, wobei mittels der axialen Verschiebung des Steuernockens (6) die Spiralfeder (19) und damit die Sicherungsbuchse (18) vorspannbar ist.

9. Lenkschloß nach Anspruch 8,
**dadurch gekennzeichnet**, daß durch Drehen des Zündschlüssels (5) die Schwenkscheibe (11) in die entsperrte Stellung überführbar ist, so daß die Sicherungsbuchse (18) in der Sicherungsstellung einrastet.

10. Lenkschloß nach einem der vorherigen Ansprüche,
**dadurch gekennzeichnet,** daß beim Herausziehen des Zündschlüssels (5) die Sicherungsbuchse (18) durch den Treibnocken (10) mitnehmbar und aus der Ausnehmung (14) herausführbar ist.

11. Lenkschloß nach einem der vorherigen Ansprüche,
**dadurch gekennzeichnet**, daß die Schwenkscheibe (11) eine Rastnase (12) aufweist, die in der sperrenden Stellung in eine Ausnehmung der Lenkspindel eingreift.

12. Lenkschloß nach einem der vorherigen Ansprüche,
**dadurch gekennzeichnet**, daß die Schwenkscheibe (11) gegen die Kraft einer Feder insbesondere einer Blattfeder (16) verschwenkbar ist.
